# EUROPEAN PATENT APPLICATION

(11) **EP 2 645 665 A1**
(43) Date of publication of application: **02.10.2013**
(21) Application number: 12005905.0
(22) Date of filing: 16.08.2012
(51) Int. Cl.: H04L 29/06, H04L 29/08

(54) **Bluetooth loe energy privacy**

(30) Priority: 29.03.2012 US 201213434215
(71) Applicant: Broadcom Corporation, Irvine, CA 92617 (US)
(72) Inventor: Polo, Angel, Solana Beach CA 92075 (US); Kwan Chikan, San Diego CA 92127 (US); Hariharan, Sriram, San Diego CA 92126 (US); Xie, Guoxin, San Diego CA 92129 (US); Tian, Xin, San Diego CA 92127 (US)
(74) Representative: Jehle, Volker Armin

(57) **Abstract**

Disclosed are various embodiments of Bluetooth low energy (BLE) modules and methods implemented therein. An embodiment of the disclosure generates in a BLE central device an identity resolving key (IRK) associated with a BLE peripheral device. The IRK is transmitted to the BLE peripheral. A resolvable private address (RPA) is generated in the BLE central device that corresponds to the IRK. Packets transmitted in an advertising channel use the RPA for transmissions to the BLE peripheral.

## Description

### BACKGROUND

Bluetooth low energy (BLE) is a specification that enables radio frequency communication between various types of devices. One particular portion of the BLE standard is the advertiser/scanner model that allows a device designated as an advertiser device to broadcast information that can be received by one or more scanner devices. An advertiser is also known as a BLE peripheral device and a scanner device can also be known as a BLE central device. In certain cases, a single device can act in an advertiser and scanner role. In other words, the device can act as a scanner with respect to other advertiser devices and an advertiser with respect to other scanner devices. Privacy can be a concern with BLE related transmissions, particularly in a mobile environment. Although in a connected state transmissions between a BLE peripheral and central device can be encrypted, in an unconnected state certain transmissions by a BLE peripheral and/or central device can be unencrypted (e.g., initial transmissions to initiate and provision a secure link). Therefore, these unencrypted transmissions may be sniffed by an attacker to track a BLE peripheral and/or central device.

### BRIEF SUMMARY OF THE INVENTION

According to an aspect, a method comprises:
generating, in a Bluetooth low energy (BLE) circuit, a first identity resolving key (IRK) associated with a first BLE peripheral device;
transmitting, from the BLE circuit, the first IRK associated with the first BLE peripheral device to the BLE peripheral device;
generating, in the BLE circuit, a first resolvable private address (RPA) corresponding to the first IRK associated with the first BLE peripheral device;
generating, in the BLE circuit, a packet comprising the first RPA; and
transmitting, from the BLE circuit, the packet to the first BLE peripheral device.

Advantageously, the method further comprises:
generating, in the BLE circuit, a second RPA corresponding to the first IRK associated with the BLE first peripheral device;
generating, in the BLE circuit, another packet comprising the second RPA associated with the first IRK corresponding to the first BLE peripheral device; and
transmitting, from the BLE circuit, the second packet to the first BLE peripheral device.

Advantageously, the method further comprises:
generating, in the BLE circuit, a second IRK associated with a second BLE peripheral device;
generating, in the BLE circuit, a third RPA associated with the second IRK corresponding to the second BLE peripheral device, the third RPA being different from the first RPA;
generating, in the BLE circuit, a third packet comprising the third RPA; and
transmitting, from the BLE circuit, the third packet to the second BLE peripheral device.

Advantageously, the first packet is transmitted to the BLE peripheral in a BLE advertising channel.

Advantageously, transmitting the first IRK associated with the first BLE peripheral device to the first BLE peripheral device further comprises:
indicating, in a pairing request command, that the BLE circuit is transmitting the first IRK to the first BLE peripheral with at least one bit in an initiator key distribution field;
transmitting, from the BLE circuit, the pairing request command to the first BLE peripheral in a pairing feature exchange phase of a pairing process; and
transmitting, from the BLE circuit, the first IRK via an encrypted link to the first BLE peripheral performed in a transport specific key distribution phase of the pairing process, the encrypted link being encrypted with a short term key generated in a short term key generation phase of the pairing process.

Advantageously, a new IRK is transmitted, from the BLE circuit, to the first BLE peripheral at a later point in time in a second encrypted link.

Advantageously, the method further comprises generating a new RPA corresponding to the IRK, the new RPA being resolvable by the BLE peripheral with the IRK.

Advantageously, generating a new RPA corresponding to the IRK is performed periodically.

Advantageously, the third RPA is resolvable by the second BLE peripheral with the second IRK.

Advantageously, the method further comprises:
caching a first IRK value corresponding to the IRK in a cache accessible to the BLE circuit, the first IRK value associated with a first address corresponding to the BLE peripheral; and
caching a second IRK value corresponding to the second IRK in the cache, the second IRK value associated with a second address corresponding to the second BLE peripheral.

According to an aspect, a system comprises:
at least one processor circuit; and
privacy logic executable in the at least one processor circuit, the privacy logic comprising:
logic that generates an identity resolving key (IRK) associated with a Bluetooth low energy (BLE) peripheral device;
logic that initiates transmission of the IRK associated with the BLE peripheral device to the BLE peripheral device;
logic that generates a resolvable private address (RPA) corresponding to the IRK associated with the BLE peripheral device;
logic that generates a packet comprising the RPA; and
logic that initiates transmission of the packet to the BLE peripheral device.

Advantageously, the privacy logic further comprises:
logic that generates another RPA corresponding to the IRK associated with the BLE peripheral device;
logic that generates another packet comprising the other RPA associated with the IRK corresponding to the BLE peripheral device; and
logic that initiates transmission of the other packet to the BLE peripheral device.

Advantageously, the privacy logic further comprises:
logic that generates another IRK associated with another BLE peripheral device;
logic that generates another RPA associated with the other IRK corresponding to the other BLE peripheral device, the other RPA being different from the RPA;
logic that generates a packet comprising the other RPA; and
logic that transmits the packet to the another BLE peripheral device.

Advantageously, the packet is transmitted to the BLE peripheral in a BLE advertising channel.

Advantageously, logic that transmits the IRK associated with the BLE peripheral device to the BLE peripheral device further comprises:
logic that indicates, in a pairing request command, that the BLE circuit is transmitting the IRK to the BLE peripheral with at least one bit in an initiator key distribution field;
logic that transmits, from the BLE circuit, the pairing request command to the BLE peripheral; and
logic that transmits, from the BLE circuit, the IRK via an encrypted link to the BLE peripheral.

Advantageously, the privacy logic further comprises logic that generates a new RPA corresponding to the IRK, the new RPA being resolvable by the BLE peripheral with the IRK.

Advantageously, the logic that generates a new RPA corresponding to the IRK is performed periodically.

Advantageously, the other RPA is resolvable by the other BLE peripheral with the other IRK and the RPA is unresolvable by the other BLE peripheral with the other IRK.

Advantageously, the privacy logic further comprises:
logic that caches a first IRK value corresponding to the IRK in a cache accessible to the BLE circuit, the first IRK value associated with a first address corresponding to the BLE peripheral; and
logic that caches a second IRK value corresponding to the other IRK in the cache, the second IRK value associated with a second address corresponding to the other BLE peripheral.

According to an aspect, a system comprises:
means for generating an identity resolving key (IRK) associated with a BLE peripheral device;
means for transmitting the IRK associated with the BLE peripheral device to the BLE peripheral device;
means for generating a resolvable private address (RPA) corresponding to the IRK associated with the BLE peripheral device;
means for generating a packet comprising the RPA; and
means for transmitting the packet to the BLE peripheral device.

### BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

FIG. 1 is a drawing of a BLE communication environment including at least one BLE peripheral and at least one BLE central device.

FIG. 2 is a drawing of a BLE central device from the BLE communication environment shown in FIG. 1 that incorporates a BLE circuit according to an embodiment of the disclosure.

FIG. 3 is a drawing of a whitelist table that can be maintained in the memory of a BLE circuit from the BLE communication environment of FIG. 1 according to an embodiment of the disclosure.

FIGS. 4-5 show one example of data flow between a BLE peripheral as well as a BLE circuit from the BLE communication environment of FIG. 1 according to an embodiment of the disclosure.

FIG. 6 is a flowchart that provides one example of logic executed in the BLE circuit of FIG. 2 according to various embodiments of the present disclosure.

### DETAILED DESCRIPTION

Embodiments of the present disclosure are related to systems and methods for enhancing privacy in a Bluetooth low energy (BLE) circuit. More specifically, embodiments of the disclosure can enhance privacy associated with a BLE circuit associated with a scanner device, or BLE central device, when the BLE circuit is acting as a scanner to receive advertiser packets in an advertising channel in a Bluetooth environment. In advertising channels, a device incorporating a BLE circuit may operate as an advertiser, a scanner, or an initiator. An advertiser often sends advertising packets at periodic intervals or a predefined duty cycle. An advertising packet transmitted by a BLE peripheral contains a Bluetooth device address associated with the peripheral and may contain the device address associated with the central device.

BLE peripherals are often considered mobile devices. For example, a BLE peripheral can include a Bluetooth key fob that is carried by a user and used to access a lock coupled to a BLE central device. A BLE peripheral can also include a sensor associated with a shoe that tracks and transmits pedometer information to a BLE central device. In this scenario, the BLE central device can comprise, for example, a sports watch, phone, or any other mobile device that is configured to receive and process data from the sensor.

The Bluetooth specification version 4.0, volume 0, published on June 30, 2010 and promulgated by Bluetooth SIG, Inc., describes BLE communications and protocols that provides for the ability of a BLE peripheral to periodically change or rotate a device address, such as a resolvable private address (RPA), which is associated with the BLE peripheral and included in advertising packets that are broadcast in a BLE advertising channel. In some situations the RPA associated with a BLE peripheral may also be included in packets sent on an advertising channel by a BLE central device.

In either scenario, without the ability to periodically change and/or rotate an RPA, an attacker may sniff packets sent on an advertising channel by a BLE peripheral and/or BLE central device and track movements of the transmitting device based upon a device address associated with the BLE central device that is embedded in these packets. In the context of this disclosure, such a device address can include a public address, a static address, a resolvable private address, and/or a non-resolvable private address. However, because a BLE peripheral can change and/or rotate its RPA and embed the RPA within packets sent in an advertising channel, the ability of an attacker to track the location or movements of a BLE peripheral based upon the device address included in packets sent in an advertising channel is limited. An RPA is resolvable based upon an identity resolving key (IRK), which can be provided from the BLE peripheral to the BLE central device during a pairing phase. A particular IRK value allows the BLE central device to resolve a number of RPA's that can be chosen by the BLE peripheral device so that the BLE central device can resolve and identify even a changed or rotated RPA chosen by a BLE peripheral device.

However, a BLE central device is not sufficiently provided with the ability by the Bluetooth 4.0 specification to generate, change and/or rotate its associated RPA. Additionally, in many cases, a BLE central device transmits packets in an advertising channel that include its device address in response to advertising packets or other data from a BLE peripheral, particularly in response to advertising packets to a BLE peripheral to which it is bonded or paired. Additionally, some BLE peripherals may transmit packets in an advertising channel that include the device address of a BLE central device to which the BLE peripheral is paired as a field in the packet. For example, if a BLE peripheral is attempting to contact a BLE central device to which it has previously been connected, the BLE peripheral may transmit advertising packets in an advertising channel that includes the device address of a BLE central device to which it is paired. Therefore, the movements of a BLE peripheral and/or BLE central device may be trackable by an attacker based upon a device address of the BLE central device, which can be included in an unencrypted advertising channel packet by either the BLE central device itself or a BLE peripheral.

Because the Bluetooth 4.0 specification does not provide for generation of the RPA by a BLE central device, once an attacker learns of the device address associated with the BLE central device (e.g., by sniffing an unencrypted packet sent in an advertising channel), the movements of the BLE central device and/or a BLE peripheral broadcasting the device address of the BLE central device in an advertising channel can be tracked. Additionally, if a BLE central device does not maintain dedicated unique IRK value for each bonded peripheral, the BLE central device is also susceptible to an attack whereby an attacker achieves pairing with the BLE central device and obtains the IRK value of the BLE central device. In such a scenario, even if the BLE central device severs a pairing with the attacker, the attacker can still resolve subsequent packets including an RPA that is resolvable by the IRK, thereby allowing the attacker to track movements of a device transmitting a packet based upon the compromised IRK of the BLE central device.

Therefore, embodiments of the disclosure provide the ability of a BLE central device to in effect periodically generate, change and/or rotate an RPA on a per peripheral device basis. In other words, the BLE central device can select unique IRK values for each BLE peripheral with which it is paired as well as periodically change and/or rotate the RPA values that are used to communicate with each of the respective BLE peripherals.

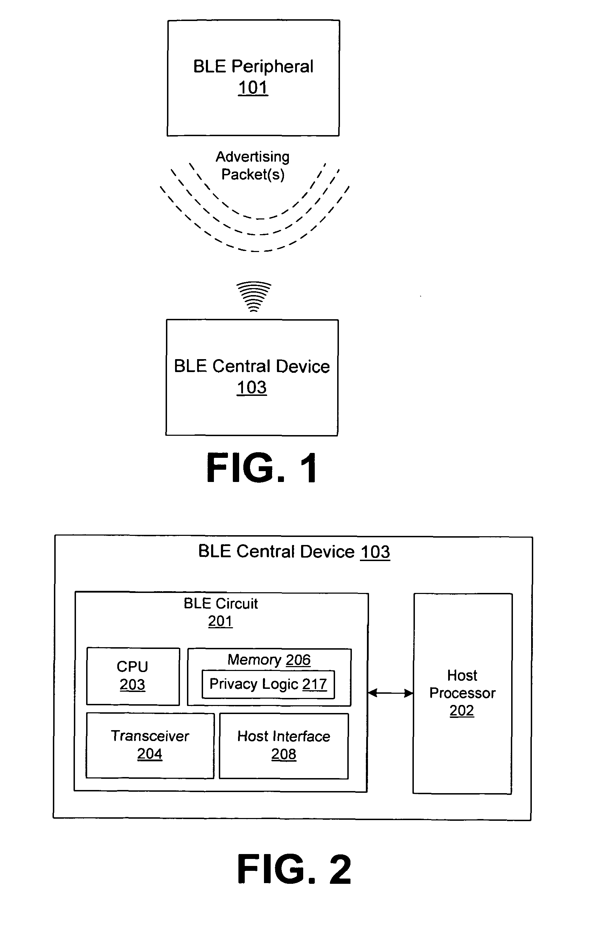

Reference is made to FIG. 1, which illustrates a BLE communication environment in which a BLE peripheral 101 can broadcast advertising packets that can be obtained by BLE central devices 103 comprising a BLE circuit within communication range of the BLE peripheral 101. A BLE peripheral 101 can comprise any device acting in an advertiser role according to the BLE standard. For example, a BLE peripheral 101 can comprise a device with a sensor that monitors data and broadcasts the data so that it can be received and read by a BLE central device 103 within communication range. In this sense, a BLE peripheral 101 may comprise any suitable logic, circuitry and/or code that may be enabled to broadcast advertisements periodically in BLE advertising channels.

The BLE central device 103 may comprise any suitable logic, circuitry and/or code that may be operable to obtain advertising packets from BLE peripherals 101 within communication range. A BLE central device 103 may be configured to perform a passive scan or an active scan. In a passive scan, the BLE central device 103 may be enabled to listen for advertising packets and may not transmit messages to advertisers. In an active scan, the BLE central device 103 may request an advertiser to transmit additional information that may not be available in the received advertising packets. In this scenario, the BLE central device 103 may transmit data such as its device address in a packet sent via an advertising channel in unencrypted form to the BLE peripheral 101. A BLE central device 103 can comprise any processor based system, such as a computing device, laptop computer, mobile device, smartphone, tablet computing system, or any other device in which a BLE circuit is integrated or connected. A BLE central device 103 can also be thought of as a host device in which a BLE circuit is integrated, where the host device includes a host processor, memory, and other computing resources and that employs a BLE circuit to facilitate communication with other devices in a BLE communication environment. In such a scenario, the host processor may execute an application that utilizes communication via the BLE circuit and hence transmits and/or receives data via the BLE circuit.

FIG. 2 is a block diagram illustrating one example of a BLE central device 103 according to an embodiment of the disclosure. The BLE central device 103 includes a BLE circuit 201 that can be in communication with a host processor 202. The BLE circuit 201 comprises a central processing unit (CPU) 203, a transceiver 204, memory 206 and a host interface 208 that facilitates communication between the BLE circuit 201 and the host processor 202. The BLE circuit 201 can be any suitable logic, circuitry, interfaces and/or code that facilitates transmission and/or receiving of signals over a BLE air interface. In one embodiment, the received signals may comprise advertising packets received over advertising channels from a BLE peripheral 101.

The CPU 203 can execute firmware associated with operation of the BLE circuit 201 for managing and/or providing support for link management functionality for the BLE circuit 201. Firmware executed by the CPU can also facilitate communication with the host processor 202 via the host interface 208. It should be appreciated that the BLE circuit 201 need not have an on-board CPU 203 and that many embodiments may comprise a transceiver 204 that receives data from and forwards data to the host processor 202. The transceiver 204 can comprise suitable logic and/or circuitry to facilitate transmission and/or receiving of wireless signals exchanged with other BLE devices. The BLE circuit 201 also includes on-board memory 206 that the CPU 203 and/or transceiver 204 can utilize for various operations such as those described herein. Privacy logic 217 can be stored in the memory 206 and executed by the CPU 203 to facilitate the functionality discussed herein. In one embodiment, the privacy logic 217 can comprise firmware that is executed by the CPU 203. In other embodiments, the privacy logic 217 can represent firmware that is executed by the transceiver 204. The privacy logic 217 can also be implemented as digital logic circuitry incorporated into the transceiver 204 and/or CPU 203. The host interface 208 can facilitate communication with other components in the BLE central device 103, such as, but not limited to, the host processor 202, input devices, memory and any other computing resources in the BLE central device 103. The host interface 208 can communicate with the BLE central device 103 via a physical transport such as universal asynchronous receiver/transmitter (UART), serial peripheral interface bus (SPI), universal serial bus (USB) interface, peripheral component interconnect (PCI), or any other device interface as can be appreciated.

Accordingly, a BLE circuit 201 according to an embodiment of the disclosure executes privacy logic 217 that generates a unique IRK for each BLE peripheral 101 to which the BLE circuit 201 is paired, from which an RPA can be generated and used for transmissions between the BLE circuit 201 and each of the BLE peripherals with which the BLE circuit 201 is bonded. In other words, the privacy logic 217 can maintain separate IRK values for each BLE peripheral 101 with which it is paired as well as separate RPA values at which the BLE circuit 201 is addressable. Therefore, the BLE circuit 201 can achieve enhanced privacy by not distributing the same IRK and/or RPA to each BPE peripheral 101 with which it is bonded. Additionally, because RPA values are resolvable based upon an IRK with which the RPA is associated, the privacy logic 217 can also periodically change or rotate an RPA corresponding to a particular BLE peripheral 101 while still allowing the BLE peripheral 101 to resolve the RPA, or determine the identity of the associated BLE central device 103. An IRK corresponding to the periodically rotating RPA is initially distributed from the BLE central device 103 to the BLE peripheral 101 over an encrypted link as provided by the Bluetooth specification. Therefore, in this scenario, the BLE peripheral 101 can determine the identity of the BLE central device 103 while an attacker that is merely sniffing unencrypted packets in an advertising channel cannot, as the RPA can be changed by the BLE central device.

Additionally, because a unique IRK is generated by the BLE central device 103 for each BLE peripheral 101 to which is bonded, even if an attacker achieves pairing with the BLE central device 103 and therefore receives a unique IRK and corresponding RPA associated with the BLE central device 103, the attacker cannot resolve packets containing an RPA associated with an IRK corresponding to another BLE peripheral 101. Accordingly, if the BLE circuit 201 severs a bonding or pairing with the attacker, the attacker will be unable to resolve packets sent to or by other BLE peripherals 101 to which the BLE circuit 201 is paired and that include an RPA of the BLE circuit 201 because these packets will include an RPA that is not resolvable with the IRK obtained by the attacker. In this sense, the privacy logic 217 has the capability to, in effect, revoke an IRK that is provided to an attacker or any BLE peripheral 101 because the IRK provided to each of the BLE peripherals 101 to which the BLE circuit 201 is paired is unique.

To accomplish the above functionality, the privacy logic 217 according to an embodiment of the disclosure can maintain a whitelist of BLE peripherals 101 to which the BLE circuit 201 is paired. Such a whitelist can be stored in memory, hardware registers, or in any type of storage mechanisms provided in a BLE circuit 201. The whitelist can maintain a list of bonded BLE peripherals 101 as well as a corresponding IRK value that is associated with each of the bonded BLE peripherals 101 from which an RPA can be generated for use in communications with each of the bonded BLE peripherals 101 over an advertising channel.

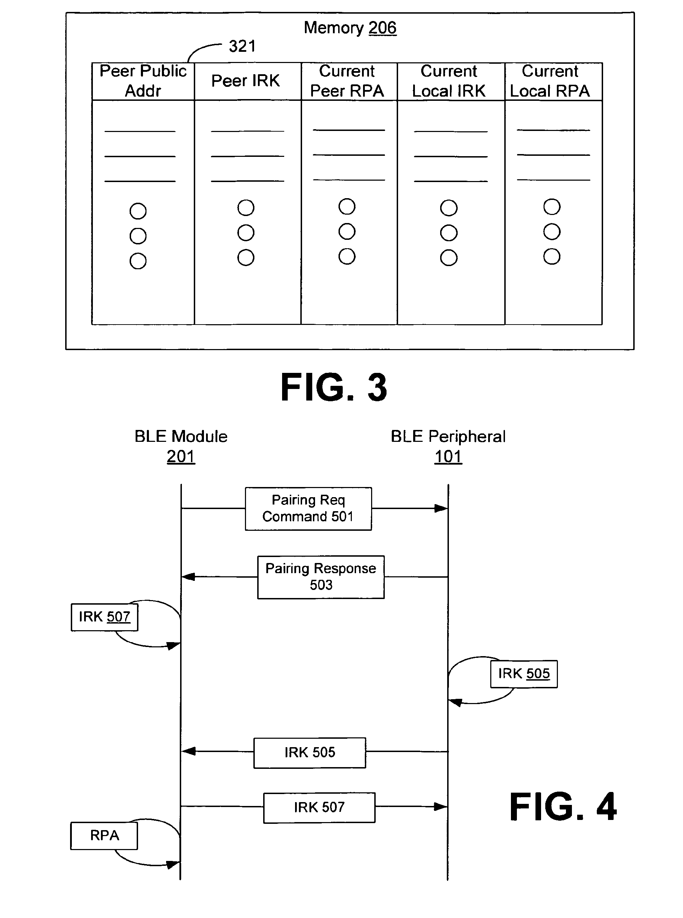

To illustrate an example of such a whitelist, reference is now made to FIG. 3, which illustrates an example whitelist table 321 that can be stored in memory 206 accessible to the BLE circuit 201. In the depicted example, the whitelist table 321 is illustrated as stored in memory 206 associated with the BLE circuit 201. However, it should be appreciated that the whitelist table 321 can also stored in a mass storage device, dedicated hardware registers, or other storage mechanisms that can be incorporated in the BLE circuit 201. Accordingly, the example of the whitelist table 321 shown in FIG. 3 is maintained by the BLE circuit 201 to facilitate the functionality described herein.

The whitelist table 321 can include an identifier associated with each BLE peripheral 101 to which the BLE central device 103 is bonded and/or paired. The identifier can include a peer public address, which is a public or static address associated with the BLE peripheral 101 or any other identifier with which the whitelist table 321 can be indexed. The whitelist table 321 can also include a peer IRK, which is an IRK received from a BLE peripheral from which an RPA corresponding to the BLE peripheral can be resolved. The whitelist table 321 can also include a current peer RPA, which is a current RPA associated with a particular BLE peripheral. As noted above, a BLE peripheral may change and/or rotate its RPA periodically. Therefore, the current RPA associated with the BLE peripheral can be cached in the whitelist table 321 by the BLE central device. Additionally, the whitelist table 321 contains a current local IRK for each BLE peripheral with which it is bonded or paired. The current local IRK is a unique IRK for each of the BLE peripherals 101 with which the BLE circuit 201 is paired. In other words, the privacy logic 217 can generate an IRK from which RPA's can be derived for each of the BLE peripherals 101 associated with a BLE circuit 201. The current local IRK is unique within the universe of other current local IRK values that are associated with other BLE peripherals with which the BLE central device is paired. To this end, the whitelist table 321 can also include a current local RPA associated with communications between the BLE circuit 201 and a BLE peripheral 101 with which the BLE circuit 201 is paired. In other words, a respective current local RPA in the whitelist table 321 is the RPA used by the BLE circuit 201 for communications with a corresponding BLE peripheral 101 associated with the entry in the whitelist table 321.

Additionally, the privacy logic 217 can also periodically rotate or change a current local RPA associated with an entry corresponding to a BLE peripheral 101 in the whitelist table 321. The current local RPA can be changed after a predetermined period of time from the last generation of the current local RPA elapses so that subsequent packets sent by the BLE circuit 201 in a BLE advertising channel are associated with a different RPA that a previous transmission using the previous RPA. In some embodiments, the privacy logic 217 can change or rotate the current local RPA after each transmission in an advertising channel. Other information can be stored in the whitelist table 321 to facilitate connection with BLE peripherals 101. For example, the peer IRK and/or current peer RPA provided by a BLE peripheral 101 can also be stored in the whitelist table 321 to facilitate determining when an advertising packet, scan response, or other types of packets sent by a BLE peripheral 101 in an advertising channel are associated with a BLE peripheral 101 with which the BLE circuit 201 is paired.

Embodiments of the disclosure can enhance privacy of a BLE circuit 201 and/or BLE peripheral 101 transmitting unencrypted packets in an advertising channel. When a bonded or paired BLE circuit 201 and BLE peripheral 101 are in an unconnected state, or a state during which they may be unable to communicate with one another, they may initiate transmissions in an advertising channel until a secure connection can be reestablished. In an unconnected state, for example, a BLE peripheral 101 may broadcast advertising packets in an advertising channel according to a predefined duty cycle. Such an advertising packet may include a device address associated with a BLE circuit 201 with which the BLE peripheral 101 is paired. Additionally, upon coming into proximity with a BLE peripheral 101, a BLE circuit 201 may respond to such an advertising packet with a scan request packet, which may also include a device address associated with the BLE circuit 201.

Therefore, reference is now made to FIG. 4, which illustrates example transmissions between a BLE circuit 201 associated with a BLE central device 103 and/or BLE peripheral 101 to facilitate the functionality described above. Accordingly, the BLE circuit 201 can generate an IRK that is unique relative to other IRK's employed by the same BLE circuit 201 to a particular BLE peripheral 101 as a part of the key distribution process described by the Bluetooth 4.0 specification that describes BLE communications, interactions, and protocols.

When pairing or bonding between a BLE circuit 201 and BLE peripheral 101 is initiated by either the BLE circuit 201 or BLE peripheral 101, during the pairing feature exchange phase of a pairing process as defined by the Bluetooth 4.0 specification, the BLE circuit 201 can indicate in a pairing request command that the BLE circuit 201 intends to transmit an IRK to the BLE peripheral 101. In one embodiment, the BLE circuit 201 can accomplish this by setting an "IdKey" bit in an initiator key distribution field and/or a responder distribution field in a pairing request command 501 and transmitting the pairing request command to the BLE peripheral 101. The BLE circuit 201 can also populate the pairing request command with other data necessary to establish a pairing with the BLE peripheral 101 that is not essential for an understanding of the embodiments of the disclosure and that is not discussed in detail herein.

Accordingly, in the security pairing response 503 as defined by the Bluetooth 4.0 specification, the BLE peripheral 101 can similarly set an "IdKey" bit in an initiator key distribution field and/or a responder distribution field to similarly indicate to the BLE circuit 201 that it intends to transmit an IRK to the BLE circuit 201. Accordingly, the BLE circuit 201 can generate an IRK 507 that corresponds to the BLE peripheral 101 can store the IRK 507 in the whitelist table 321 in an entry associated with the BLE peripheral. Similarly, the BLE peripheral 101 can then generate an IRK 505 corresponding to the BLE circuit 201.

Accordingly, during a transport specific key distribution phase of the pairing process as defined by the Bluetooth 4.0 specification, the BLE peripheral 101 and privacy logic 217 can transmit respective IRK 505, 507 generated on behalf of the other over an encrypted link that is encrypted with a short term key generated during a short term key generation phase of the pairing process or after other session keys that are in use in an encrypted link. Encryption of the link as well as generation of a short term key and subsequent regeneration of session keys with which the link is encrypted is described by the Bluetooth 4.0 specification. The privacy logic 217 can then generate an RPA corresponding to the IRK. Additionally, as shown in FIG. 4, the privacy logic 217 can also generate an RPA corresponding to the IRK 507 corresponding to the BLE peripheral 101, which can be used for subsequent transmissions in an advertising channel by the BLE circuit 201 and/or BLE peripheral 101 where the RPA of the BLE circuit 201 is included in a transmitted packet.

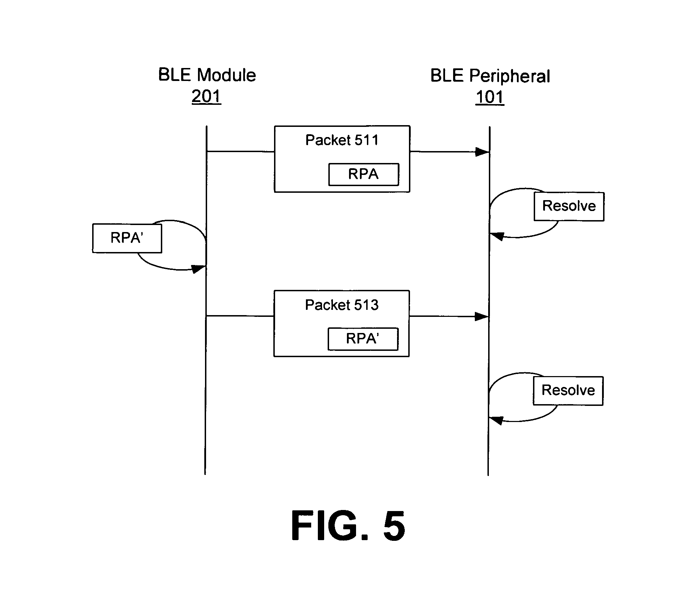

Referring next to FIG. 5, shown is a data flow diagram that illustrates how the privacy logic 217 can periodically change or rotate an RPA that is associated with an IRK in the whitelist table 321 that is, in turn, uniquely associated with a BLE peripheral 101 with which the BLE circuit 201 has been paired. In the depicted example, a packet 511, such as a scan request packet generated by the BLE circuit 201 and transmitted to the BLE peripheral 101, can be generated by the BLE circuit 201. The packet 511 includes an RPA, such as the current RPA corresponding to the IRK associated with the BLE peripheral 101 from the whitelist table 321. Because the BLE peripheral 101 is provided with a unique IRK by the privacy logic 517, the BLE peripheral 101 can resolve the RPA based upon the IRK. RPA resolution by the BLE peripheral 101 means that the BLE peripheral 101 can identify the BLE circuit 201 from the RPA because the RPA maps onto the IRK using a resolution algorithm.

Accordingly, the privacy logic 217 can periodically change or rotate the RPA associated with a particular IRK and BLE peripheral 101. In such a scenario, the privacy logic 217 generates a new RPA that can still be resolved by a corresponding BLE peripheral 101 using the IRK provided by the privacy logic 217. In this way, the privacy logic 217 can rotate or change its RPA's as well as maintain different RPA's for different BLE peripherals 101, thereby enhancing privacy and reducing susceptibility to tracking by an attacker.

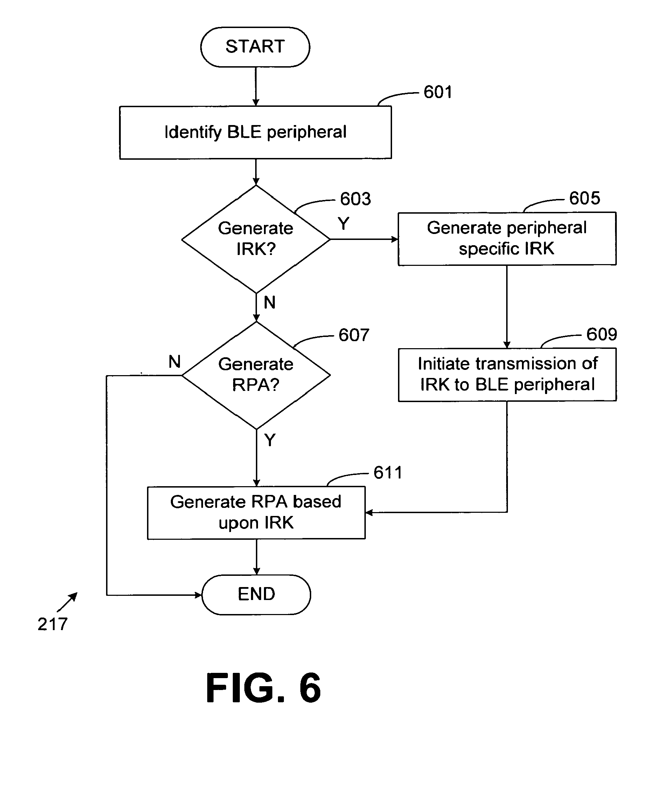

Referring next to FIG. 6, shown is a flowchart that provides one example of the operation of a portion of privacy logic 217 executed by the BLE circuit 201 according to various embodiments. It is understood that the flowchart of FIG. 6 provides merely an example of the many different types of functional arrangements that may be employed to implement the operation of the portion of logic executed in the BLE circuit 201 as described herein. As an alternative, the flowchart of FIG. 6 may be viewed as depicting an example of steps of a method implemented in the BLE circuit 201 according to one or more embodiments. The process depicted in FIG. 6 can be implemented in the transceiver 204, the CPU 203 and/or any combination thereof by privacy logic 217 executed in the BLE circuit 201.

First, in box 601, the privacy logic 217 can identify a BLE peripheral 101 based upon an advertising packet received in an advertising channel from the BLE peripheral 101. The BLE peripheral 101 can be identified based upon a device address or other information in the advertising packet. As noted above, some advertising packets received from a BLE peripheral 101 may require a response in the advertising channel by the privacy logic 217. Therefore, if the BLE circuit 201 and BLE peripheral are paired, in box 603 the privacy logic 217 can determine whether an IRK should be generated by the privacy logic 217 that is uniquely associated with the BLE peripheral 101. In other words, the privacy logic 217 determines whether the whitelist table 321 includes an entry corresponding to the BLE peripheral 101 that includes an IRK for the BLE peripheral 101. If not, then in box 605 the privacy logic 217 generates an IRK corresponding to the BLE peripheral 101 as described in reference to FIG. 4 and stores the IRK in the whitelist table 321.

In box 609, the privacy logic 217 initiates transmission of the IRK to the BLE peripheral as also described in FIG. 4. In box 611, the privacy logic 217 generates an RPA corresponding to the IRK that the BLE peripheral 101 can resolve using the IRK. If an IRK does not need to be generated by the privacy logic 217 that corresponds to the BLE peripheral 101, then the privacy logic 217 proceeds from box 603 to box 607 and determines whether an RPA should be generated. In other words, if the whitelist table 321 contains an IRK corresponding to the BLE peripheral 101, then the privacy logic 217 determines in box 607 whether the RPA corresponding to the peripheral should be changed and/or rotated.

The flowchart of FIG. 6 and data flow diagrams of FIGS. 4-5 show the functionality and operation of a BLE circuit 201 and/or privacy logic 217 executed by the BLE circuit 201 according to various embodiments of the disclosure. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor. The machine code may be converted from the source code, etc. If embodied in hardware, each block may represent a circuit or a number of interconnected circuits to implement the specified logical function(s).

Although the flowchart of FIG. 6 and data flow diagrams of FIGS. 4-5 show a specific order of execution, it is understood that the order of execution may differ from that which is depicted. For example, the order of execution of two or more blocks may be scrambled relative to the order shown. Also, two or more blocks shown in succession in the flowchart of FIG. 6 and data flow diagrams of FIGS. 4-5 may be executed concurrently or with partial concurrence. Further, in some embodiments, one or more of the blocks shown in the flowchart of FIG. 6 and data flow diagrams of FIGS. 4-5 may be skipped or omitted. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present disclosure.

Also, any logic or application described herein, including any executed in the BLE circuit 201, that comprises software or code can be embodied in any non-transitory computer-readable medium for use by or in connection with an instruction execution system such as, for example, a processor in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. The computer-readable medium can comprise any one of many physical media such as, for example, magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method comprising:
generating, in a Bluetooth low energy (BLE) circuit, a first identity resolving key (IRK) associated with a first BLE peripheral device;
transmitting, from the BLE circuit, the first IRK associated with the first BLE peripheral device to the BLE peripheral device;
generating, in the BLE circuit, a first resolvable private address (RPA) corresponding to the first IRK associated with the first BLE peripheral device;
generating, in the BLE circuit, a packet comprising the first RPA; and
transmitting, from the BLE circuit, the packet to the first BLE peripheral device.

2. The method of claim 1, further comprising:
generating, in the BLE circuit, a second RPA corresponding to the first IRK associated with the BLE first peripheral device;
generating, in the BLE circuit, another packet comprising the second RPA associated with the first IRK corresponding to the first BLE peripheral device; and
transmitting, from the BLE circuit, the second packet to the first BLE peripheral device.

3. The method of claim 1, further comprising:
generating, in the BLE circuit, a second IRK associated with a second BLE peripheral device;
generating, in the BLE circuit, a third RPA associated with the second IRK corresponding to the second BLE peripheral device, the third RPA being different from the first RPA;
generating, in the BLE circuit, a third packet comprising the third RPA; and
transmitting, from the BLE circuit, the third packet to the second BLE peripheral device.

4. The method of claim 1, wherein the first packet is transmitted to the BLE peripheral in a BLE advertising channel.

5. The method of claim 1, wherein transmitting the first IRK associated with the first BLE peripheral device to the first BLE peripheral device further comprises:
indicating, in a pairing request command, that the BLE circuit is transmitting the first IRK to the first BLE peripheral with at least one bit in an initiator key distribution field;
transmitting, from the BLE circuit, the pairing request command to the first BLE peripheral in a pairing feature exchange phase of a pairing process; and
transmitting, from the BLE circuit, the first IRK via an encrypted link to the first BLE peripheral performed in a transport specific key distribution phase of the pairing process, the encrypted link being encrypted with a short term key generated in a short term key generation phase of the pairing process.

6. The method of claim 5, wherein a new IRK is transmitted, from the BLE circuit, to the first BLE peripheral at a later point in time in a second encrypted link.

7. The method of claim 1, further comprising generating a new RPA corresponding to the IRK, the new RPA being resolvable by the BLE peripheral with the IRK.

8. The method of claim 1, wherein generating a new RPA corresponding to the IRK is performed periodically.

9. The method of claim 3, wherein the third RPA is resolvable by the second BLE peripheral with the second IRK.

10. The method of claim 2, further comprising:
caching a first IRK value corresponding to the IRK in a cache accessible to the BLE circuit, the first IRK value associated with a first address corresponding to the BLE peripheral; and
caching a second IRK value corresponding to the second IRK in the cache, the second IRK value associated with a second address corresponding to the second BLE peripheral.

11. A system, comprising:
at least one processor circuit; and
privacy logic executable in the at least one processor circuit, the privacy logic comprising:
logic that generates an identity resolving key (IRK) associated with a Bluetooth low energy (BLE) peripheral device;
logic that initiates transmission of the IRK associated with the BLE peripheral device to the BLE peripheral device;
logic that generates a resolvable private address (RPA) corresponding to the IRK associated with the BLE peripheral device;
logic that generates a packet comprising the RPA; and
logic that initiates transmission of the packet to the BLE peripheral device.

12. The system of claim 11, wherein the privacy logic further comprises:
logic that generates another RPA corresponding to the IRK associated with the BLE peripheral device;
logic that generates another packet comprising the other RPA associated with the IRK corresponding to the BLE peripheral device; and
logic that initiates transmission of the other packet to the BLE peripheral device.

13. The system of claim 11, wherein the privacy logic further comprises:
logic that generates another IRK associated with another BLE peripheral device;
logic that generates another RPA associated with the other IRK corresponding to the other BLE peripheral device, the other RPA being different from the RPA;
logic that generates a packet comprising the other RPA; and
logic that transmits the packet to the another BLE peripheral device.

14. The system of claim 11, wherein the packet is transmitted to the BLE peripheral in a BLE advertising channel.

15. A system comprising:
means for generating an identity resolving key (IRK) associated with a BLE peripheral device;
means for transmitting the IRK associated with the BLE peripheral device to the BLE peripheral device;
means for generating a resolvable private address (RPA) corresponding to the IRK associated with the BLE peripheral device;
means for generating a packet comprising the RPA; and
means for transmitting the packet to the BLE peripheral device.
